# FASCICULE DE BREVET EUROPEEN

(11) **EP 1 750 954 B1**
(45) Date de publication et mention de la délivrance du brevet: **23.04.2008**
(21) Numéro de dépôt: 05745596.6
(22) Date de dépôt: 06.05.2005
(51) Int. Cl.: B60C 9/26, B60C 9/22, B60C 9/20

(54) **PNEUMATIQUE POUR VEHICULES LOURDS**
SCHWERFAHRZEUGREIFEN
HEAVY VEHICLE TYRE

(30) Priorité: 13.05.2004 FR 0405243
(43) Date de publication de la demande: 14.02.2007
(73) Titulaire: Société de Technologie Michelin, 63000 Clermont-Ferrand (FR); Michelin Recherche et Technique S.A., 1763 Granges-Paccot (CH)
(72) Inventeur: CLUZEL, Guy, F-63110 Beaumont (FR)
(74) Mandataire: Le Cam, Stéphane Georges Elie
(86) Numéro de dépôt international: PCT/EP2005/004928
(87) Numéro de publication internationale: WO 2005/113258

(56) Documents cités:
- WO-A-96/20095
- FR-A- 1 228 241
- FR-A- 2 246 404
- US-A- 3 881 538
- US-A- 4 237 953
- US-A- 5 277 239

## Description

La présente invention concerne un pneumatique à armature de carcasse radiale ancrée de part et d'autre à au moins une tringle de bourrelet et ayant une armature de sommet constituée d'au moins deux nappes dites de travail, superposées et formées de fils ou câbles parallèles dans chaque nappe et croisés d'une nappe à la suivante en faisant avec la direction circonférentielle du pneumatique des angles au plus égaux à 45° en valeur absolue.

Elle concerne plus particulièrement un pneumatique du type "Poids Lourds", dont le rapport de la hauteur sur jante H sur sa largeur axiale maximale S est au plus égal à 0,80, et destiné à équiper un véhicule de moyen ou fort tonnage, tel que camion, autobus, remorque, etc.

Certains pneumatiques actuels, dits "routiers", sont destinés à rouler à grande vitesse et sur des trajets de plus en plus longs, du fait de l'amélioration du réseau routier et de la croissance du réseau autoroutier dans le monde. L'ensemble des conditions, sous lesquelles un tel pneumatique est appelé à rouler, permet sans aucun doute un accroissement du nombre de kilomètres parcourus, l'usure du pneumatique étant moindre ; par contre l'endurance de ce dernier et en particulier de l'armature de sommet est pénalisée.

Le manque d'endurance concerne aussi bien la résistance à la fatigue des nappes de sommet, et en particulier la résistance à la séparation entre extrémités de nappes, que la résistance à la fatigue des câbles de la portion d'armature de carcasse située sous l'armature de sommet, la première insuffisance étant fortement influencée par la température de fonctionnement régnant en bordures des nappes de travail, que ce soit en roulage ligne droite ou en roulage en dérive.

Une première solution a été décrite dans la demande de brevet WO-A-96/20095 et propose de disposer, d'une part entre l'armature de carcasse et la nappe de travail d'armature de sommet, radialement la plus proche de l'axe de rotation, une nappe axialement continue, formée de câbles métalliques inextensibles faisant avec la direction circonférentielle un angle au moins égal à 60°, et dont la largeur axiale est au moins égale à la largeur axiale de la nappe de sommet de travail la plus courte, et d'autre part entre les deux nappes de sommet de travail une nappe additionnelle formée d'éléments métalliques, orientés sensiblement parallèlement à la direction circonférentielle, la largeur axiale de ladite nappe étant au moins égale à 0,7 S0.

Les problèmes concernant la séparation entre nappes de travail et la résistance à la fatigue des câbles d'armature de carcasse sont ainsi sensiblement réduits, et les températures de fonctionnement sont abaissées ; par contre les roulages prolongés des pneumatiques ainsi construits ont fait apparaître des ruptures de fatigue des câbles de la nappe additionnelle et plus particulièrement des bords de ladite nappe, que la nappe dite de triangulation soit présente ou non.

Afin de remédier à ces nouveaux inconvénients cités ci-dessus et d'améliorer l'endurance de l'armature de sommet du type de pneumatique étudié, la demande de brevet WO-A-99/24269, non publiée à ce jour, propose, de part et d'autre du plan équatorial et dans le prolongement axial immédiat de la nappe additionnelle d'éléments de renforcement sensiblement parallèles à la direction circonférentielle, de coupler, sur une certaine distance axiale, les deux nappes de sommet de travail formées d'éléments de renforcement croisés d'une nappe à la suivante pour ensuite les découpler par des profilés de mélange de caoutchouc au moins sur le restant de la largeur commune aux dites deux nappes de travail.

En vue d'améliorer l'endurance de l'armature de sommet du type de pneumatique étudié, sans se trouver confronté à des problèmes de fatigue d'éléments de renforcement, la demande de brevet WO99/58350 modifie radicalement l'orientation des éléments de renforcement inextensibles de la nappe additionnelle disposée radialement entre lesdites nappes de travail, les dits éléments étant alors radiaux.

Les contraintes de cisaillement entre les deux nappes de sommet de travail sont très importantes et plus particulièrement dans le cas du couplage des dites deux nappes de travail, ce qui entraîne, avec la fatigue du pneumatique, des délaminations entre les nappes.

La demande de brevet WO-A-99/58351 propose ainsi, associé à une nappe additionnelle dont l'orientation des éléments de renforcement est radiale, un couplage des deux nappes de sommet de travail dans le prolongement axial immédiat de la nappe additionnelle pour être ensuite découplées par des profilés de mélange de caoutchouc au moins sur le restant de la largeur commune auxdites deux nappes de travail.

La demande de brevet WO-A-00/69659 propose, afin de remédier aux inconvénients ci-dessus et d'améliorer encore l'endurance de l'armature de sommet de tels pneumatiques, de concilier les avantages de l'orientation radiale avec ceux de l'orientation circonférentielle des éléments de renforcement de la nappe additionnelle située radialement entre les deux nappes de sommet de travail. Selon ce document, une armature additionnelle formée d'au moins d'une nappe d'éléments de renforcement, disposée radialement entre deux nappes de travail, est axialement composée de trois parties, une partie centrale sous forme de nappe formée d'éléments de renforcement métalliques inextensibles et sensiblement radiaux, et deux parties latérales sous formes de bandes formées chacune d'éléments de renforcement métalliques circonférentiels élastiques.

Le brevet US-A-4,237,953 décrit par ailleurs des architectures sommet constituées de deux nappes de travail, les extrémités axiales de l'une d'entres elles étant retournées pour couvrir les extrémités axiales de l'autre nappe dans le but d'augmenter la rigidité longitudinale de ces zones.

Le brevet US-A-5,277,239 décrit un pneumatique pour automobile comportant deux nappes de travail d'éléments de renforcement à haut module d'élasticité dans lequel les extrémités d'une première nappe de travail sont retournés pour venir coiffer les extrémités de l'autre nappe de travail, ledit pneumatique comportant encore des nappes d'épaule d'éléments de renforcements circonférentiels.

Le document US-A-4,237,953 décrit un pneumatique comportant trois nappes de travail, les extrémités de la première étant retournées pour couvrir la nappe radialmeent la plus à l'extérieur.

Le document FR-A-1 228 241 décrit un pneumatique pouvant comporter trois nappes dont au moins une a ses extrémités repliées pour favoriser le refroidissement des constituants de l'armature.

Le document US-A-3,881,538 décrit une armature de renforcement pour pneumatique constitué d'un empilement de nappes, les extrémités de la première recouvrant les autres nappes dans le but de résister aux séparations de nappes.

Des câbles sont dits inextensibles lorsque lesdits câbles présentent sous une force de traction égale à 10% de la force de rupture un allongement relatif au plus égal à 0,2%.

Des câbles sont dits élastiques lorsque lesdits câbles présentent sous une force de traction égale à la charge de rupture un allongement relatif au moins égal à 4%.

La direction circonférentielle du pneumatique, ou direction longitudinale, est la direction correspondant à la périphérie du pneumatique et définie par la direction de roulement du pneumatique. Des éléments de renforcement circonférentiels sont des éléments qui font avec ladite direction des angles compris dans l'intervalle + 2,5°, - 2,5° autour de 0°.

La direction transversale ou axiale du pneumatique est parallèle à l'axe de rotation du pneumatique.

La direction radiale est une direction coupant l'axe de rotation du pneumatique et perpendiculaire à celui-ci. Des éléments de renforcement sensiblement radiaux sont des éléments qui font avec la direction méridienne des angles compris dans l'intervalle + 5°, - 5° autour de 0°.

L'axe de rotation du pneumatique est l'axe autour duquel il tourne en utilisation normale.

Un plan radial ou méridien est un plan qui contient l'axe de rotation du pneumatique.

Le plan médian circonférentiel, ou plan équatorial, est un plan perpendiculaire à l'axe de rotation du pneu et qui divise le pneumatique en deux moitiés.

Les inventeurs se sont donnés pour mission de fournir des pneumatiques pour véhicules "Poids-Lourds", dont les performances d'endurance sont encore améliorées par rapport aux pneumatiques usuels.

Ce but est atteint selon l'invention par un pneumatique, pour véhicules de type Poids Lourds, à armature de carcasse radiale comprenant une armature de sommet formée d'au moins deux nappes de sommet de travail d'éléments de renforcement, croisés d'une nappe à l'autre en faisant avec la direction circonférentielle des angles compris entre 10°et 45°, elle-même coiffée radialement d'une bande de roulement, ladite bande de roulement étant réunie à deux bourrelets par l'intermédiaire de deux flancs, l'armature de sommet comportant entre deux nappes de sommet de travail au moins une nappe d'éléments de renforcement additionnelle, les extrémités axiales de la nappe de travail d'élément de renforcement radialement la plus proche de l'armature de carcasse étant retournées pour couvrir les extrémités axiales d'une nappe de sommet de travail radialement extérieure à la nappe additionnelle, lesdits éléments de renforcement de la nappe d'élément de renforcement radialement la plus proche de l'armature de carcasse étant élastiques.

Un pneumatique de type poids lourd ainsi réalisé conduit à des propriétés en usure tout à fait satisfaisantes et en outre, il apparaît que l'endurance d'un tel pneumatique est encore améliorée ; le retournement de la nappe de travail radialement intérieur contribue à l'amélioration de l'endurance du pneumatique, l'influence des extrémités libres des nappes de travail étant sensiblement diminuée.

La réalisation de l'invention, lesdits éléments de renforcement de la nappe d'élément de renforcement radialement la plus proche de l'armature de carcasse étant élastiques, conduit notamment à un procédé de fabrication du pneumatique simple et apporte d'autres avantages sur lesquels il sera revenu ultérieurement, selon le mode de réalisation de l'armature de sommet.

Selon une réalisation avantageuse de l'invention, les extrémités axiales de la nappe d'élément de renforcement radialement la plus proche de l'armature de carcasse couvrent les extrémités axiales de la nappe de sommet de travail radialement la plus à l'extérieur. Selon cette réalisation préférée de l'invention, quel que soit le nombre de nappes de travail, aucune extrémité desdites nappes n'est laissée libre.

Avantageusement encore selon l'invention, la nappe additionnelle est constituée, sur au moins une partie de la largeur axiale, d'éléments de renforcement orientés circonférentiellement. La présence d'éléments de renforcement circonférentiels autorise notamment une amélioration des propriétés d'usure du pneumatique.

Une réalisation avantageuse de l'invention prévoit que les extrémités axiales de la nappe d'élément de renforcement radialement la plus proche de l'armature de carcasse sont axialement intérieures aux extrémités axiales de la nappe d'éléments de renforcement additionnelle. Selon cette réalisation avantageuse de l'invention, les extrémités retournées de la nappe d'élément de renforcement radialement la plus proche de l'armature de carcasse couvrent radialement les extrémités de la nappe additionnelle pour une meilleure endurance de l'armature de sommet et notamment de ladite nappe additionnelle.

Selon une première variante de réalisation de l'invention, La couche d'éléments de renforcement circonférentiels est avantageusement une couche continue sur toute sa largeur axiale.

La présence dans le pneumatique selon l'invention d'une couche d'éléments de renforcement circonférentiels dont la largeur satisfait la relation ci-dessus autorise notamment une diminution des contraintes de cisaillement entre les couches de travail et donc améliore encore de ce fait les performances d'endurance du pneumatique.

Par ailleurs, les roulages effectués avec de tels pneumatiques satisfaisant les critères de l'invention ont montré que les éléments de renforcement circonférentiels ne présentent pas de rupture y compris aux extrémités de la couche d'éléments de renforcement circonférentiels.

Selon une seconde variante de réalisation de l'invention, la nappe additionnelle est constituée d'au moins deux parties latérales sous formes de bandes formées chacune d'éléments de renforcement circonférentiels.

De préférence encore selon cette seconde variante, la nappe additionnelle comporte en outre une partie centrale formée d'une nappe constituée d'éléments de renforcement sensiblement radiaux. Une telle nappe contribue également à la diminution des contraintes de cisaillement entre les couches de travail et donc améliore encore de ce fait les performances d'endurance du pneumatique notamment en limitant les élévations de température de la masse caoutchouteuse.

Selon l'une ou l'autre de ces variantes de réalisation on observe une meilleure rigidité des épaules du pneumatique, ce qui est favorable à une diminution des risques d'usure irrégulière de la bande de roulement qui augmentent lorsque le rapport de forme des pneumatiques diminue.

La réalisation du pneumatique, comportant un retournement des extrémités de la nappe de travail radialement la plus à l'intérieur, permet, par ailleurs, de contribuer à la rigidité de l'armature de renforcement dans les zones axialement extérieures du pneumatique et ainsi d'améliorer l'endurance des éléments de renforcement circonférentiels notamment sensibles dans ces zones.

Selon un premier mode de réalisation avantageux de l'invention, les éléments de renforcement de la nappe d'éléments de renforcement circonférentiels sont des éléments de renforcement métalliques présentant un module sécant à 0,7% d'allongement compris entre 10 et 120 GPa et un module tangent maximum inférieur à 150 GPa.

Selon une réalisation préférée, le module sécant des éléments de renforcement à 0,7% d'allongement est inférieur à 100 Gpa, de préférence supérieur à 50 GPa et de préférence encore compris entre 60 et 90 GPa.

De préférence également, le module tangent maximum des éléments de renforcement est inférieur à 130 GPa.

Le module sécant est mesuré sur une courbe contrainte de traction en fonction de l'allongement déterminée avec une précharge inférieure à 5 Kg.

Selon un mode de réalisation préféré, les éléments de renforcements de la nappe d'éléments de renforcement circonférentiels sont des éléments de renforcement métalliques présentant une courbe contrainte de traction en fonction de l'allongement relatif ayant des faibles pentes pour les faibles allongements et une pente sensiblement constante et forte pour les allongements supérieurs. De tels éléments de renforcement de la nappe d'éléments de renforcement circonférentiels sont habituellement dénommés éléments "bi-module".

Selon une réalisation préférée de l'invention, la pente sensiblement constante et forte apparaît à partir d'un allongement relatif compris entre 0,2% et 0,8%.

Les différentes caractéristiques des éléments de renforcement énoncées ci-dessus sont mesurées sur des éléments de renforcement prélevés sur des pneumatiques.

Des éléments de renforcement plus particulièrement adaptés à la réalisation de la nappe d'éléments de renforcement circonférentiels selon l'invention sont par exemple des assemblages de formule 21.23 ; ce câble à torons est constitué de 21 fils élémentaires de diamètre égal à 23/100 mm et de formule 3 x (1+6), avec 3 torons, constitués de 7 fils dont un formant une âme centrale, et tordus ensembles. De la même façon, un autre exemple d'éléments de renforcement est un assemblage de formule 21.28.

L'utilisation de tels éléments de renforcement dans au moins une nappe d'éléments de renforcement circonférentiels permettent notamment de conserver des rigidités de la nappe satisfaisante y compris après les étapes de conformation et de cuisson dans des procédés de fabrication usuels.

Selon un deuxième mode de réalisation de l'invention, les éléments de renforcement circonférentiels peuvent être formées d'éléments métalliques inextensibles et coupés de manière à former des tronçons de longueur très inférieure à la circonférence de la nappe la moins longue, mais préférentiellement supérieure à 0,1 fois ladite circonférence, les coupures entre tronçons étant axialement décalées les unes par rapport aux autres. De préférence encore, le module d'élasticité à la traction par unité de largeur de la nappe additionnelle est inférieur au module d'élasticité à la traction, mesuré dans les mêmes conditions, de la nappe de sommet de travail la plus extensible. Un tel mode de réalisation permet de conférer, de manière simple, à la nappe d'éléments de renforcement circonférentiels un module pouvant facilement être ajusté (par le choix des intervalles entre tronçons d'une même rangée), mais dans tous les cas plus faible que le module de la nappe constituée des mêmes éléments métalliques mais continus, le module de la nappe additionnelle étant mesuré sur une nappe vulcanisée d'éléments coupés, prélevée sur le pneumatique.

Selon un troisième mode de réalisation de l'invention, les éléments de renforcement circonférentiels sont des éléments métalliques ondulés, le rapport a/λ de l'amplitude d'ondulation sur la longueur d'onde étant au plus égale à 0,09. De préférence, le module d'élasticité à la traction par unité de largeur de la nappe additionnelle est inférieur au module d'élasticité à la traction, mesuré dans les mêmes conditions, de la nappe de sommet de travail la plus extensible.

Les éléments métalliques sont préférentiellement des câbles d'acier.

Avantageusement encore les largeurs axiales des nappes de sommet de travail radialement adjacentes à une nappe additionnelle d'éléments de renforcement circonférentiels sont supérieures à la largeur axiale de ladite nappe additionnelle et de préférence, lesdites nappes de sommet de travail adjacentes à la nappe additionnelle sont de part et d'autre du plan équatorial et dans le prolongement axial immédiat de la nappe additionnelle couplées sur une largeur axiale, notamment lorsque la nappe de travail retournée à ses extrémités n'est pas adjacente à ladite nappe additionnelle.

La présence de tels couplages entre les nappes de sommet de travail adjacentes à la nappe d'éléments de renforcement circonférentiels permettent encore la diminution des contraintes de tension agissant sur les éléments circonférentiels axialement le plus à l'extérieur et situé le plus près du couplage.

Il faut entendre par nappes couplées des nappes dont les éléments de renforcement respectifs sont séparés radialement d'au plus 1,5 mm, ladite épaisseur de caoutchouc étant mesurée radialement entre les génératrices respectivement supérieure et inférieure desdits éléments de renforcement.

L'invention prévoit encore avantageusement pour diminuer les contraintes de tension agissant sur les éléments circonférentiels axialement le plus à l'extérieur que l'angle formé avec la direction circonférentielle par les éléments de renforcement des couches de sommet de travail est inférieur à 30° et de préférence inférieur à 25°.

Selon une autre variante avantageuse de l'invention, les couches de sommet de travail comportent des éléments de renforcement, croisés d'une nappe à l'autre, faisant avec la direction circonférentielle des angles variables selon la direction axiale, lesdits angles étant supérieurs sur les bords axialement extérieurs des couches d'éléments de renforcement par rapport aux angles desdits éléments mesurés au niveau du plan médian circonférentiel. Une telle réalisation de l'invention permet d'augmenter la rigidité circonférentielle dans certaines zones et au contraire de la diminuer dans d'autres, notamment pour diminuer les mises en compression de l'armature de carcasse.

Une réalisation préférée de l'invention prévoit encore que l'armature de sommet est complétée radialement à l'extérieur par au moins une couche supplémentaire, dite de protection, d'éléments de renforcement dits élastiques, orientés par rapport à la direction circonférentielle avec un angle compris entre 10° et 45° et de même sens que l'angle formé par les éléments inextensibles de la couche de travail qui lui est radialement adjacente.

Selon un premier mode de réalisation de l'invention, la nappe de protection coiffe les extrémités retournées de la nappe de travail radialement intérieure, notamment lorsque celles-ci sont radialement extérieur à la nappe de travail radialement la plus à l'extérieur.

Selon un autre mode de réalisation de l'invention, la nappe de protection est positionnée axialement entre les extrémités retournées de la nappe de travail radialement intérieure, et avantageusement ses extrémités axiales sont contiguës, ou axialement juxtaposées, aux extrémités retournées de la nappe de travail radialement intérieure, notamment lorsque celles-ci sont radialement extérieur à la nappe de travail radialement la plus à l'extérieur.

Selon un dernier mode de réalisation de l'invention, les extrémités retournées de la nappe de travail radialement intérieure sont radialement extérieures à la nappe de protection, et de préférence recouvrent les extrémités de ladite nappe de protection.

Une variante de réalisation de l'invention, selon laquelle les éléments de renforcements de la nappe de travail radialement intérieure sont élastiques, prévoit que les parties retournées de ladite nappe de travail radialement intérieure ont une fonction semblable à celle d'une nappe de protection, notamment lorsque lesdits éléments de renforcement retournés ne sont pas croisés avec les éléments de la nappe de renforcement qui leur ait radialement adjacente. De préférence, selon cette variante de réalisation, les éléments de renforcement de la nappe de travail radialement intérieure et les éléments de la nappe de travail radialement extérieure ont des angles opposés de même valeur. Selon cette variante de réalisation, une nappe de protection complémentaire n'est plus utile.

Selon l'une quelconque des réalisations de l'invention évoquées précédemment, l'armature de sommet peut encore être complétée, radialement à l'intérieur entre l'armature de carcasse et la couche de travail radialement intérieure la plus proche de ladite armature de carcasse, par une couche de triangulation d'éléments de renforcement inextensibles métalliques en acier faisant, avec la direction circonférentielle, un angle supérieur à 50° en valeur absolue.

D'autres détails et caractéristiques avantageux de l'invention ressortiront ci-après de la description des exemples de réalisation de l'invention en référence aux figures 1 à 5 qui représentent :
- figure 1, une vue méridienne partielle d'un schéma d'un pneumatique selon un mode de réalisation de l'invention,
- figure 2, une vue méridienne partielle d'un schéma d'un pneumatique selon un deuxième mode de réalisation de l'invention,
- figure 3, une vue méridienne partielle d'un schéma d'un pneumatique selon un troisième mode de réalisation de l'invention,
- figure 4, une vue méridienne partielle d'un schéma d'un pneumatique selon un quatrième mode de réalisation de l'invention.

Les figures ne sont pas représentées à l'échelle pour en simplifier la compréhension. Les figures ne représentent qu'une demi-vue d'un pneumatique qui se prolonge de manière symétrique par rapport à l'axe XX' qui représente le plan médian circonférentiel, ou plan équatorial, d'un pneumatique.

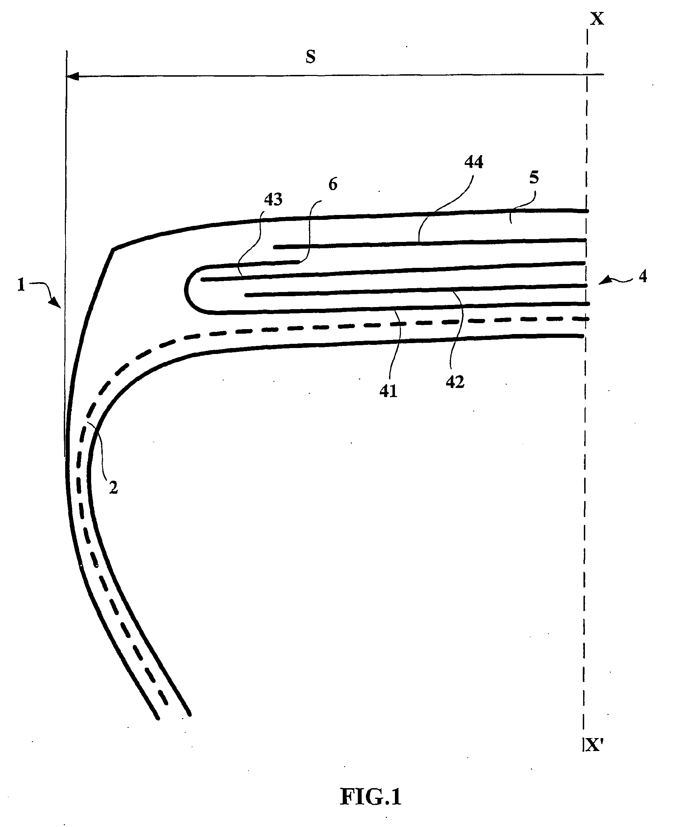

Sur la figure 1, le pneumatique 1, de dimension 385/55 R 22.5 X, a un rapport de forme H/S égal à 0,55, H étant la hauteur du pneumatique 1 sur sa jante de montage et S sa largeur axiale maximale. Ledit pneumatique 1 comprend une armature de carcasse radiale 2 ancrée dans deux bourrelets, non représentés sur les figures. L'armature de carcasse est formée d'une seule couche de câbles métalliques. Cette armature de carcasse 2 est frettée par une armature de sommet 4, formée radialement de l'intérieur à l'extérieur :
- d'une première nappe de travail 41 formée de câbles métalliques en acier 21×23, de type "bi-module", continus sur toute la largeur de la nappe, orientés d'un angle égal à 20°.
- d'une nappe d'éléments de renforcement circonférentiels 42 formée de câbles métalliques en acier 21×28, de type "bi-module",
- d'une seconde nappe de travail 43 formée de câbles métalliques inextensibles 11.35 non frettés, continus sur toute la largeur de la nappe, orientés d'un angle égal à 16° et croisés aux câbles métalliques de la couche 41,
- d'une nappe de protection 44 formées de câbles métalliques élastiques 18x23.

L'armature de sommet est elle-même coiffée d'une bande de roulement 5.

Conformément à l'invention, la nappe de travail 41 est retournée et ses extrémités 6 sont disposées radialement à l'extérieur de la nappe de travail 43 et radialement adjacentes à celle-ci. Les extrémités retournées 6 de la nappe de travail 41 sont radialement couvertes par la nappe de protection 44.

Conformément à l'invention, le retournement de la nappe de travail 41 permet d'éliminer les extrémités libres des nappes de travail et de limiter les déplacements de ces extrémités lors du roulage tout en augmentant les rigidités aux épaules du pneumatique. La nappe 42 d'éléments de renforcement circonférentiels participe quant à elle à l'amélioration notamment de la résistance à l'usure du pneumatique, en association avec le retournement de la nappe de travail 41, du fait de l'augmentation des rigidités. Elle permet encore d'améliorer la stabilité du sommet du pneumatique lors du gonflage. En outre, les retournements de la nappe de travail 41 couvre les extrémités de ladite nappe 42 d'éléments de renforcement circonférentiels sur une largeur L et améliore ainsi l'endurance de ces éléments de renforcement circonférentiels du fait notamment de la participation des parties retourné de la nappe de travail 41 à la rigidité de l'armature notamment dans les parties axialement extrêmes de la nappe 42. La largeur de recouvrement L est avantageusement supérieure à quatre fois le pas des éléments de renforcement circonférentiels de la nappe 42.

La nappe 42 est dans l'exemple décrit une nappe continue d'éléments de renforcement circonférentiels mais pourrait également être constituée, conformément à l'invention, de deux nappes d'éléments de renforcement circonférentiels plus étroites, axialement distantes l'une de l'autre et avantageusement mises en place sensiblement au niveau des épaules du pneumatique. Ces deux nappes d'éléments de renforcement circonférentiels peuvent encore être axialement séparées par une nappe d'éléments de renforcement orientés radialement.

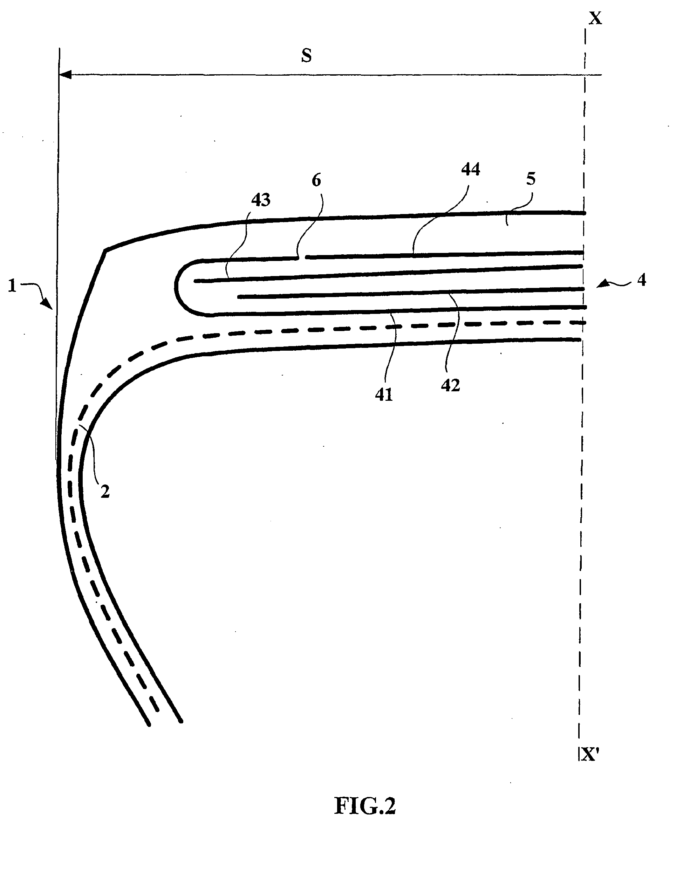

Sur la figure 2, le pneumatique 1 diffère de celui représenté sur la figure 1 en ce que la nappe de protection 44 est axialement intercalée entre les extrémités 6 des retournements de la nappe de travail 41. Une telle réalisation permet notamment de limiter l'épaisseur de l'armature de sommet notamment par rapport au cas de la figure 1.

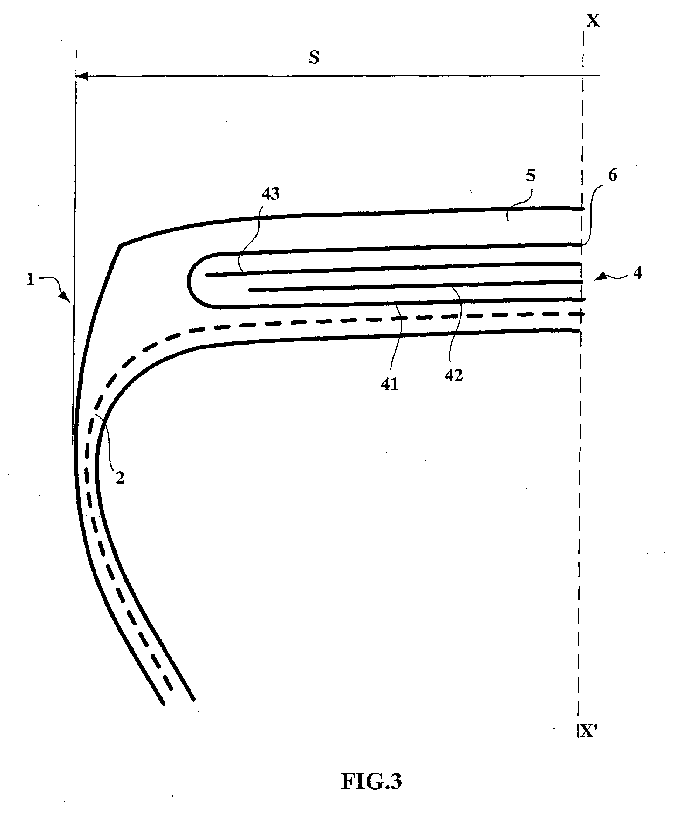

Sur la figure 3, le pneumatique 1 diffère de ceux représentés sur les figures précédentes en ce qu'il ne comporte pas de nappe de protection. Par contre, les retournements de la nappe de travail 41 sont axialement prolongés et les extrémités 6 sont axialement contiguës l'une à l'autre. Les retournements de la nappe de travail 41 se substituent ainsi fonctionnellement à une nappe de protection. Avantageusement les angles des deux nappes de travail 41, 43 sont identiques en valeur absolue de sorte la fonctionnalité de protection remplie par les retournements de la nappe de travail 41 soit optimale.

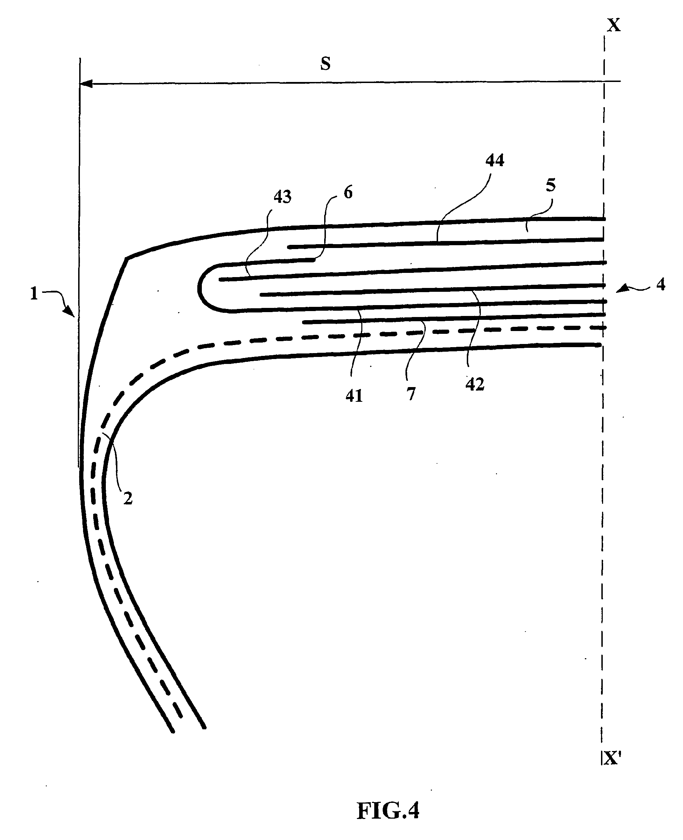

Sur la figure 4, le pneumatique 1 est une variante de réalisation de celui représenté sur la figure 1 selon laquelle l'armature de sommet comporte une nappe de triangulation 7 intercalée radialement entre l'armature de carcasse et la nappe de travail 41. La nappe de triangulation 7 est formée de câbles métalliques inextensibles 11x35, non fretté, orientés d'un angle égal à 50°, lesdits câbles métalliques étant croisés avec les éléments de renforcement de la nappe 41.

Des essais ont été réalisés avec le pneumatique réalisé selon l'invention conformément à la représentation de la figure 2 et comparés avec un pneumatique de référence identique en dimension et comportant deux nappes de travail et une nappe comportant des éléments de renforcement orientés circonférentiellement intercalée radialement entre les deux nappes de travail, lesdites deux nappes de travail étant découplées.

Ce pneumatique de référence ne comporte donc pas de retournement de la nappe d'élément de renforcement de travail radialement la plus proche de l'armature de carcasse.

Les essais réalisés ont consisté en des tests de roulage destructif sur volant ; ce type de tests sur volant simule des essais sur circuit soit en ligne droite, soit à forte dérive.

Les conditions de charge et de pressions sont les m^mes pour le pneumatique selon l'invention et le pneumatique de référence. La pression de gonflage des pneumatiques est de 10 bars à chaud. La charge nominale est de 4500 kg et le pneumatique subit une augmentation de 150 daN tous les 5000Km.

Deux types d'essais de roulage destructif ont ainsi été réalisés :
- le premier essai consiste en un test de roulage sur un volant, le pneu suivant un parcours en ligne droite. Les résultats obtenus selon cet essai ont montré que le pneumatique selon l'invention autorise un kilométrage plus important avant de constater une rupture du pneumatique. Le pneumatique selon l'invention a parcouru 40 500 Km alors que le pneumatique de référence a été totalement dégradé après 25 000 Km.
- le deuxième essai est semblable au précédent, le pneu subissant un cycle de mises en dérive. Il apparaît comme dans le test précédent que le pneumatique selon l'invention a parcouru un kilométrage plus important correspondant à 15% de plus que le pneu de référence.

## Revendications

1. Pneumatique (1) pour véhicule de type poids lourd, à armature de carcasse radiale (2) comprenant une armature de sommet (4) formée d'au moins deux nappes de sommet de travail (41, 43) d'éléments de renforcement, croisés d'une nappe à l'autre en faisant avec la direction circonférentielle des angles compris entre 10° et 45°, elle-même coiffée radialement d'une bande de roulement (5), ladite bande de roulement (5) étant réunie à deux bourrelets par l'intermédiaire de deux flancs, l'armature de sommet (4) comportant entre deux nappes de sommet de travail (41, 43) au moins une nappe d'éléments de renforcement additionnelle (42), **caractérisé en ce que** les extrémités axiales (6) de la nappe de travail (41) d'élément de renforcement radialement la plus proche de l'armature de carcasse (2) sont retournées pour couvrir les extrémités axiales d'une nappe de sommet de travail (43) radialement extérieure à la nappe additionnelle (42) et **en ce que** les éléments de renforcement de la nappe (41) d'élément de renforcement radialement la plus proche de l'armature de carcasse (2) sont élastiques.

2. Pneumatique (1) selon la revendication 1, **caractérisé en ce que** les extrémités axiales (6) de la nappe (41) d'élément de renforcement radialement la plus proche de l'armature de carcasse (2) sont axialement intérieures aux extrémités axiales de la nappe d'éléments de renforcement additionnelle (42).

3. Pneumatique (1) selon l'une des revendications 1 ou 2, **caractérisé en ce que** les extrémités axiales (6) de la nappe (41) d'élément de renforcement radialement la plus proche de l'armature de carcasse couvrent les extrémités axiales de la nappe (43) de sommet de travail radialement la plus à l'extérieur.

4. Pneumatique (1) selon l'une des revendications 1 à 3, **caractérisé en ce que** la nappe additionnelle (42) est constituée, sur au moins une partie de la largeur axiale, d'éléments de renforcement orientés circonférentiellement.

5. Pneumatique (1) selon la revendication 4, **caractérisé en ce que** la nappe additionnelle (42) est constituée d'au moins deux parties latérales sous formes de bandes formées chacune d'éléments de renforcement circonférentiels.

6. Pneumatique (1) selon la revendication 5, **caractérisé en ce que** la nappe additionnelle (42) comporte une partie centrale formée d'une nappe constituée d'éléments de renforcement sensiblement radiaux.

7. Pneumatique (1) selon l'une des revendications 4 à 6, **caractérisé en ce que** les éléments de renforcement d'au moins une couche d'éléments de renforcement circonférentiels sont des éléments de renforcement métalliques présentant un module sécant à 0,7 % d'allongement compris entre 10 et 120 GPa et un module tangent maximum inférieur à 150 GPa.

8. Pneumatique (1) selon la revendication 7, **caractérisé en ce que** le module sécant des éléments de renforcement à 0,7% d'allongement est inférieur à 100 Gpa, de préférence supérieur à 50GPa et de préférence encore compris entre 60 et 90 GPa.

9. Pneumatique (1) selon l'une des revendications 7 ou 8, **caractérisé en ce que** le module tangent maximum des éléments de renforcement est inférieur à 130 GPa.

10. Pneumatique (1) selon l'une des revendications 4 à 9, **caractérisé en ce que** les éléments de renforcement d'au moins une couche d'éléments de renforcement circonférentiels sont des éléments de renforcement métalliques présentant une courbe contrainte de traction en fonction de l'allongement relatif ayant des faibles pentes pour les faibles allongements et une pente sensiblement constante et forte pour les allongements supérieurs.

11. Pneumatique (1) selon l'une des revendications 4 à 6, **caractérisé en ce que** les éléments de renforcement d'au moins une couche d'éléments de renforcement circonférentiels sont des éléments de renforcement métalliques coupés de manière à former des tronçons de longueur inférieure à la circonférence de la nappe la moins longue, mais supérieure à 0,1 fois ladite circonférence, les coupures entre tronçons étant axialement décalées les unes par rapport aux autres, le module d'élasticité à la traction par unité de largeur de la couche additionnelle étant de préférence inférieur au module d'élasticité à la traction, mesuré dans les mêmes conditions, de la couche de sommet de travail la plus extensible.

12. Pneumatique (1) selon l'une des revendications 4 à 6, **caractérisé en ce que** les éléments de renforcement d'au moins une couche d'éléments de renforcement circonférentiels sont des éléments de renforcement métalliques ondulés, le rapport a/λ de l'amplitude d'ondulation a sur la longueur d'onde λ étant au plus égale à 0,09, le module d'élasticité à la traction par unité de largeur de la couche additionnelle étant de préférence inférieur au module d'élasticité à la traction, mesuré dans les mêmes conditions, de la couche de sommet de travail la plus extensible.

13. Pneumatique (1) selon l'une des revendications précédentes, **caractérisé en ce que** l'angle formé avec la direction circonférentielle par les éléments de renforcement des couches (41, 43) de sommet de travail est inférieur à 30° et de préférence inférieur à 25°.

14. Pneumatique (1) selon l'une des revendications précédentes, **caractérisé en ce que** les couches (41, 43) de sommet de travail comportent des éléments de renforcement, croisés d'une nappe à l'autre, faisant avec la direction circonférentielle des angles variables selon la direction axiale.

15. Pneumatique (1) selon l'une des revendications précédentes, **caractérisé en ce que** l'armature de sommet (4) comporte en outre une couche de triangulation (7) formée d'éléments de renforcement métalliques faisant avec la direction circonférentielle des angles supérieurs à 50° en valeur absolue.

16. Pneumatique (1) selon l'une des revendications précédentes, **caractérisé en ce que** l'armature de sommet (4) est complétée radialement à l'extérieur par au moins une nappe supplémentaire (44), dite de protection, d'éléments de renforcement dits élastiques, orientés par rapport à la direction circonférentielle avec un angle compris entre 10° et 45° et de même sens que l'angle formé par les éléments inextensibles de la nappe de travail qui lui est radialement adjacente.

17. Pneumatique (1) selon la revendication 16, **caractérisé en ce que** les extrémités de la nappe de protection (44) sont axialement juxtaposées aux extrémités axiales (6) de la nappe (41) d'élément de renforcement radialement la plus proche de l'armature de carcasse (2) retournées pour couvrir les extrémités axiales d'une nappe de sommet de travail (43) radialement extérieure à la nappe additionnelle (42).

## Claims

1. A tyre (1) for vehicles of heavy-vehicle type, having a radial carcass reinforcement (2) comprising a crown reinforcement (4) formed of at least two working crown plies (41, 43) of reinforcement elements, crossed from one ply to the other forming angles of between 10° and 45° with the circumferential direction, which itself is topped radially by a tread (5), said tread (5) being joined to two beads by means of two sidewalls, the crown reinforcement (4) comprising between two working crown plies (41, 43) at least one additional ply (42) of reinforcement elements, **characterised in that** the axial ends (6) of the reinforcement element working ply (41) radially closest to the carcass reinforcement (2) are turned up to cover the axial ends of a working crown ply (43) radially external to the additional ply (42) and **in that** the reinforcement elements of the reinforcement element ply (41) radially closest to the carcass reinforcement are elastic.

2. A tyre (1) according to Claim 1, **characterised in that** the axial ends (6) of the reinforcement element ply (41) radially closest to the carcass reinforcement (2) are axially internal to the axial ends of the additional ply (42) of reinforcement elements.

3. A tyre (1) according to one of Claims 1 or 2, **characterised in that** the axial ends (6) of the reinforcement element ply (41) radially closest to the carcass reinforcement cover the axial ends of the radially outermost working crown ply (43).

4. A tyre (1) according to one of Claims 1 to 3, **characterised in that** the additional ply (42) is formed, over at least part of the axial width, of circumferentially oriented reinforcement elements.

5. A tyre (1) according to Claim 4, **characterised in that** the additional ply (42) is formed of at least two lateral parts in the form of strips each formed of circumferential reinforcement elements.

6. A tyre (1) according to Claim 5, **characterised in that** the additional ply (42) comprises a central part formed of a ply consisting of substantially radial reinforcement elements.

7. A tyre (1) according to one of Claims 4 to 6, **characterised in that** the reinforcement elements of at least one layer of circumferential reinforcement elements are metallic reinforcement elements having a secant modulus at 0.7% elongation of between 10 and 120 GPa and a maximum tangent modulus of less than 150 GPa.

8. A tyre (1) according to Claim 7, **characterised in that** the secant modulus of the reinforcement elements at 0.7% elongation is less than 100 GPa, preferably greater than 50 GPa and more preferably still of between 60 and 90 GPa.

9. A tyre (1) according to one of Claims 7 or 8, **characterised in that** the maximum tangent modulus of the reinforcement elements is less than 130 GPa.

10. A tyre (1) according to one of Claims 4 to 9, **characterised in that** the reinforcement elements of at least one layer of circumferential reinforcement elements are metallic reinforcement elements having a curve of tensile stress as a function of the relative elongation having shallow gradients for the low elongations and a substantially constant, steep gradient for the higher elongations.

11. A tyre (1) according to one of Claims 4 to 6, **characterised in that** the reinforcement elements of at least one layer of circumferential reinforcement elements are metallic reinforcement elements cut so as to form sections of a length less than the circumference of the least long ply, but greater than 0.1 times said circumference, the cuts between sections being axially offset from each other, the modulus of elasticity in tension per unit of width of the additional layer preferably being less than the modulus of elasticity in tension, measured under the same conditions, of the most extensible working crown layer.

12. A tyre (1) according to one of Claims 4 to 6, **characterised in that** the reinforcement elements of at least one layer of circumferential reinforcement elements are undulating metallic reinforcement elements, the ratio a/λ of the amplitude of undulation a to the wavelength λ being at most equal to 0.09, the modulus of elasticity in tension per unit of width of the additional layer preferably being less than the modulus of elasticity in tension, measured under the same conditions, of the most extensible working crown layer.

13. A tyre (1) according to one of the preceding claims, **characterised in that** the angle formed with the circumferential direction by the reinforcement elements of the working crown layers (41, 43) is less than 30° and preferably less than 25°.

14. A tyre (1) according to one of the preceding claims, **characterised in that** the working crown layers (41, 43) comprise reinforcement elements, crossed from one ply to the other, forming angles which are variable in the axial direction with the circumferential direction.

15. A tyre (1) according to one of the preceding claims, **characterised in that** the crown reinforcement (4) furthermore comprises a triangulation layer (7) formed of metallic reinforcement elements forming angles greater than 50° in absolute value with the circumferential direction.

16. A tyre (1) according to one of the preceding claims, **characterised in that** the crown reinforcement (4) is finished off radially to the outside by at least one supplementary ply (44), referred to as a protective ply, of what are called elastic reinforcement elements, which are oriented relative to the circumferential direction at an angle of between 10° and 45° and of the same direction as the angle formed by the inextensible elements of the working ply which is radially adjacent thereto.

17. A tyre (1) according to claim 16, **characterised in that** the ends of the protective ply (44) are axially juxtaposed on the axial ends (6) of the reinforcement element ply (41) radially closest to the carcass reinforcement (2) which are turned up to cover the axial ends of a working crown ply (43) radially external to the additional ply (42).

## Patentansprüche

1. Luftreifen (1) für Fahrzeug des Typs Lkw, mit radialem Karkassgürtel (2), der einen Laufflächenkronengürtel (4) aufweist, der aus mindestens zwei Laufflächenkronenarbeitslagen (41, 43) aus Verstärkungselementen besteht, die von einer Lage zur anderen gekreuzt sind, indem sie zu der Umfangsrichtung Winkel zwischen 10° und 45° bilden, auf der wiederum radial eine Lauffläche (5) sitzt, wobei die Lauffläche (5) mit zwei Wülsten über zwei Flanken verbunden ist, wobei der Laufflächenkronengürtel (4) zwischen zwei Laufflächenkronenarbeitslagen (41, 43) mindestens eine zusätzliche Lage aus Verstärkungselementen (42) aufweist, **dadurch gekennzeichnet, dass** die axialen Enden (6) der Arbeitslage (41) aus Verstärkungselementen, die radial dem Karkassgürtel (2) am nächsten liegt, umgedreht sind, um die axialen Enden einer Laufflächenkronenarbeitslage (43) radial außerhalb der zusätzlichen Lage (42) abzudecken, und dass die Verstärkungselemente der Lage (41) aus Verstärkungselementen, die radial dem Karkassgürtel (2) am nächsten liegt, elastisch sind.

2. Luftreifen (1) nach Anspruch 1, **dadurch gekennzeichnet, dass** die axialen Enden (6) der Lage (41) Verstärkungselemente, die radial dem Karkassgürtel (2) am nächsten liegt, axial innerhalb der axialen Enden der zusätzlichen Lage aus Verstärkungselementen (42) liegt.

3. Luftreifen (1) nach einem der Ansprüche 1 oder 2, **dadurch gekennzeichnet, dass** die axialen Enden (6) der Lage (41) aus Verstärkungselementen, die radial dem Karkassgürtel am nächsten liegt, die axialen Enden der Lage (43) der Arbeitslaufflächenkrone, die radial am äußersten liegt, abdecken.

4. Luftreifen (1) nach einem der Ansprüche 1 bis 3, **dadurch gekennzeichnet, dass** die zusätzliche Lage (42) auf mindestens einem Teil der axialen Breite aus umfänglich ausgerichteten Verstärkungselementen besteht.

5. Luftreifen (1) nach Anspruch 4, **dadurch gekennzeichnet, dass** die zusätzliche Lage (42) aus mindestens zwei seitlichen Teilen in Form von Bändern besteht, die jeweils aus umfänglichen Verstärkungselementen ausgebildet sind.

6. Luftreifen (1) nach Anspruch 5, **dadurch gekennzeichnet, dass** die zusätzliche Lage (42) einen zentralen Teil aufweist, der aus einer Lage gebildet ist, die aus im Wesentlichen radialen Verstärkungselementen besteht.

7. Luftreifen (1) nach einem der Ansprüche 4 bis 6, **dadurch gekennzeichnet, dass** die Verstärkungselemente mindestens einer Schicht umfänglicher Verstärkungselemente metallische Verstärkungselemente sind, die ein Sekantenmodul bei 0,7 % Dehnung zwischen 10 und 120 GPa und ein maximales Tangentenmodul kleiner als 150 GPa aufweisen.

8. Luftreifen (1) nach Anspruch 7, **dadurch gekennzeichnet, dass** das Sekantenmodul der Verstärkungselemente bei 0,7 % Dehnung kleiner ist als 100 GPa, vorzugsweise größer als 50 GPa und vorzugsweise zwischen 60 und 90 GPa.

9. Luftreifen (1) nach einem der Ansprüche 7 oder 8, **dadurch gekennzeichnet, dass** das maximale Tangentenmodul der Verstärkungselemente kleiner ist als 130 GPa.

10. Luftreifen (1) nach einem der Ansprüche 4 bis 9, **dadurch gekennzeichnet, dass** die Verstärkungselemente mindestens einer Schicht umfänglicher Verstärkungselemente metallische Verstärkungselemente sind, die eine Zugspannungskurve in Abhängigkeit von der relativen Dehnung aufweisen, die geringe Gefälle für geringe Dehnungen und ein im Wesentlichen konstantes und starkes Gefälle für größere Dehnungen hat.

11. Luftreifen (1) nach einem der Ansprüche 4 bis 6, **dadurch gekennzeichnet, dass** die Verstärkungselemente mindestens einer Schicht umfänglicher Verstärkungselemente metallische Verstärkungselemente sind, die so zugeschnitten sind, dass sie Abschnitte mit einer Länge bilden, die kleiner ist als der Umfang der kürzesten Lage, aber 0,1 Mal größer als der Umfang, wobei die Schnitte zwischen Abschnitten axial voneinander versetzt sind, wobei das Zugelastizitätsmodul pro Breiteneinheit der zusätzlichen Schicht vorzugsweise kleiner ist als das Zugelastizitätsmodul, das unter den gleichen Bedingungen an der dehnbarsten Laufflächenkronenarbeitsschicht gemessen wird.

12. Luftreifen (1) nach einem der Ansprüche 4 bis 6, **dadurch gekennzeichnet, dass** die Verstärkungselemente mindestens einer Schicht umfänglicher Verstärkungselemente wellige metallische Verstärkungselemente sind, wobei das Verhältnis a/λ der Welligkeitsamplitude a zu der Wellenlänge λ mindestens gleich 0,09 ist, wobei das Zugelastizitätsmodul pro Breiteneinheit der zusätzlichen Schicht vorzugsweise kleiner ist als das Zugelastizitätsmodul, das unter den gleichen Bedingungen an der dehnbarsten Laufflächenkronenarbeitsschicht gemessen wird.

13. Luftreifen (1) nach einem der vorhergehenden Ansprüche, **dadurch gekennzeichnet, dass** der Winkel, der mit der Umfangsrichtung von den Verstärkungselementen der Laufflächenkronenarbeitsschichten (41, 43) gebildet wird, kleiner ist als 30° und vorzugsweise kleiner als 25°.

14. Luftreifen (1) nach einem der vorhergehenden Ansprüche, **dadurch gekennzeichnet, dass** die Laufflächenkronenarbeitsschichten (41, 43) Verstärkungselemente aufweisen, die von einer Lage zur anderen gekreuzt sind, die mit der Umfangsrichtung variable Winkel entlang der axialen Richtung bilden.

15. Luftreifen (1) nach einem der vorhergehenden Ansprüche, **dadurch gekennzeichnet, dass** der Laufflächenkronengürtel (4) ferner eine Triangulationsschicht (7) aufweist, die aus metallischen Verstärkungselementen gebildet ist, die mit der Umfangsrichtung Winkel größer als 50° in Absolutwert bilden.

16. Luftreifen (1) nach einem der vorhergehenden Ansprüche, **dadurch gekennzeichnet, dass** der Laufflächenkronengürtel (4) radial außerhalb mit mindestens einer zusätzlichen Lage (44), Schutzlage genannt, aus elastisch genannten Verstärkungselementen vervollständigt ist, die in Bezug auf die Umfangsrichtung mit einem Winkel zwischen 10° und 45° ausgerichtet sind und die gleiche Richtung haben wie der Winkel, den die nicht dehnbaren Elemente der Arbeitslage, die radial neben ihr liegt, bilden.

17. Luftreifen (1) nach Anspruch 16, **dadurch gekennzeichnet, dass** die Enden der Schutzlage (44) axial neben den axialen Enden (6) der Lage (41) Verstärkungselemente, die radial dem Karkassgürtel (2) am nächsten liegt, umgedreht sind, um die axialen Enden einer Laufflächenkronenarbeitslage (43), die radial außerhalb der zusätzlichen Lage (42) liegt, abzudecken.
